# EUROPEAN PATENT SPECIFICATION

(11) **EP 4 142 188 B1**
(45) Date of publication and mention of the grant of the patent: **12.06.2024**
(21) Application number: 20946377.7
(22) Date of filing: 20.07.2020
(51) Int. Cl.: H04J 3/06

(54) **CLOCK SYNCHRONIZATION METHOD FOR CPRI TRANSMISSION DATA, AND RELATED APPARATUS**
TAKTSYNCHRONISATIONSVERFAHREN FÜR CPRI-ÜBERTRAGUNGSDATEN UND ZUGEHÖRIGE VORRICHTUNG
PROCÉDÉ DE SYNCHRONISATION D'HORLOGE POUR DONNÉES DE TRANSMISSION DE CPRI, ET APPAREIL ASSOCIÉ

(43) Date of publication of application: 01.03.2023
(73) Proprietor: Harbin Hytera Technology Corp., Ltd., Harbin, Heilongjiang 150028 (CN)
(72) Inventor: ZHENG, Junbo, Harbin, Heilongjiang 150028 (CN); LI, Zhen, Harbin, Heilongjiang 150028 (CN); TAN, Xiao, Harbin, Heilongjiang 150028 (CN); ZHENG, Jinliang, Harbin, Heilongjiang 150028 (CN)
(74) Representative: Grünecker Patent- und Rechtsanwälte PartG mbB
(86) International application number: PCT/CN2020/102989
(87) International publication number: WO 2022/016312

(56) References cited:
- WO-A1-2020/118627
- CN-A- 101 527 959
- CN-A- 111 181 680
- US-A1- 2012 113 972
- US-A1- 2015 304 971
- US-A1- 2020 037 194
- Yuan Xingmeng, Chen Liang, Xu Lantian: "Research and implementation of 5G baseband data transmission technology based on CPRI protocol", Electronic Engineering & Product World, no. 4, 30 April 2019 (2019-04-30), XP055888341,

## Description

### TECHNICAL FIELD

The present invention relates to the technical field of communication, and in particular to a clock synchronization method for CPRI data transmission, and a related apparatus.

### BACKGROUND

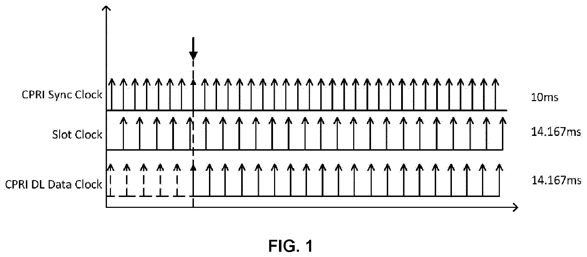

As shown in FIG. 1, CPRI Sync Clock is a 10 ms CPRI reference clock. Slot Clock is a slot clock of a non-LTE frame structure, and the Slot Clock cycle is 30 ms when the CPRI transmits PDT data. DL Trigger Clock is also a 30 ms clock signal, the DL Trigger Clock is 10 ms ahead of the Slot Clock, and the DL Trigger Clock signal is used by a protocol stack to prepare downlink data in advance. The downlink data is prepared, and when the Slot Clock signal comes, the prepared downlink data will be sent. CPRI DL Data Clock: in order to satisfy one frame of data of the Slot Clock, this clock cycle is 30 ms, and IQ data is delivered to RRU depending on this clock signal. When CPRI is started, the CPRI DL Data Clock is aligned with the CPRI Sync Clock, while the Slot Clock is not aligned with the CPRI DL Data Clock.

In the prior art, when a DL Trigger Clock signal comes, it is determined whether CPRI needs to be realigned currently, and if the CPRI needs to be realigned and the current slot number being 0 is satisfied, a 35 ms software timer is started. When the software timer expires, a CPRI link is disconnected and then reconnected. This moment when the CPRI is reconnected is exactly between 2 CPRI Sync Clocks, so when the CPRI link is reconnected, the CPRI Sync Clock is aligned with the Slot Clock when a next CPRI Sync Clock signal comes, and the CPRI Sync Clock is aligned with the CPRI DL Data Clock at this time, and therefore, the Slot Clock is aligned with the CPRI DL Data Clock.

Document US 2015304971 relates to clock synchronization for CPRI data transmission wherein strict jitter requirements must be fulfilled.

The inventor studies the existing clock synchronization process and finds that the Slot Clock (30 ms) and the CPRI Sync Clock (10 ms) keep an integer multiple relationship. If the Slot Clock and the CPRI Sync Clock are not in an integer multiple relationship and are not in a double-slot condition, such as a communication network where the CPRI transmits other non-LTE frame data, whether the CPRI Sync Clock is aligned with the Slot Clock or not cannot be determined according to slot number and the time of the software timing in the prior art.

### SUMMARY

In view of this, the present invention provides a clock synchronization method for CPRI data transmission, and a related apparatus, which are used to solve the problem that in the synchronization process, synchronization can be realized only when a cycle correlation between Slot Clock and CPRI Sync Clock, a slot and the type of transmitted data meet corresponding requirements. Specific schemes are as follows:
a clock synchronization method for CPRI data transmission, comprising: predetermining a target clock cycle of an alignment clock, wherein a common public radio interface CPRI reference clock is aligned with a CPRI slot clock when the target clock cycle is triggered, and determining a preset number of downlink trigger clocks according to the target clock cycle, and comprising:

determining whether the CPRI needs to be realigned when the alignment clock is received;
if yes, counting the number of the received downlink trigger clocks with the current moment as a starting point until the number reaches the preset number;
reconfiguring the CPRI; and
after the reconfiguration is completed, waiting for the CPRI reference clock, and aligning a CPRI downlink data clock with the CPRI slot clock when the CPRI reference clock is received.

Optionally, the predetermining a target clock cycle of an alignment clock in the method described above comprises:
acquiring a reference clock cycle of the CPRI reference clock and a slot clock cycle of the CPRI slot clock;
determining a downlink trigger clock cycle of the downlink trigger clock and a downlink data clock cycle of the CPRI downlink data clock according to the slot clock cycle; and
determining the target clock cycle of the alignment clock according to the reference clock cycle and the slot clock cycle.

Optionally, the determining the target clock cycle of the alignment clock according to the reference clock cycle and the slot clock cycle in the method described above comprises:
obtaining the least common multiple of the reference clock cycle and the slot clock cycle, wherein
the target clock cycle is the least common multiple or an integer multiple of the least common multiple.

Optionally, the determining a preset number of downlink trigger clocks according to the target clock cycle in the method described above comprises:
calculating a ratio of the target cycle to the slot clock cycle; and
taking the ratio as the preset number of the downlink trigger clocks.

Optionally, the counting the number of the received downlink trigger clocks with the current moment as a starting point until the number reaches the preset number in the method described above comprises:
when the downlink trigger clock is received, counting the current number of the downlink trigger clocks with the current moment as a starting point, and updating the number to the current number;
comparing the number with the preset number; and
when the number is less than the preset number, continuously receiving the downlink trigger clock until the number reaches the preset number.

Optionally, the aligning a CPRI downlink data clock with the CPRI slot clock when the CPRI reference clock is received in the method described above comprises:
when the CPRI reference clock is received, aligning the CPRI reference clock with the slot clock, and aligning the CPRI downlink data clock with the CPRI reference clock; and
determining that the CPRI downlink data clock is aligned with the slot clock.

A clock synchronization apparatus for CPRI data transmission, wherein a target clock cycle of an alignment clock is predetermined, wherein a CPRI reference clock is aligned with a CPRI slot clock when the target clock cycle is triggered, and a preset number of downlink trigger clocks is determined according to the target clock cycle, comprising:
a determination module configured to determine whether the CPRI needs to be realigned when the alignment clock is received;
a counting module configured to, if yes, count the number of the received downlink trigger clocks with the current moment as a starting point until the number reaches the preset number; a reconfiguration module configured to reconfigure the CPRI; and
an alignment module configured to, after the reconfiguration is completed, wait for the CPRI reference clock, and align a CPRI downlink data clock with the CPRI slot clock when the CPRI reference clock is received.

Optionally, the synchronization apparatus described above for predetermining a target clock cycle of an alignment clock comprises:
an acquisition module configured to acquire a reference clock cycle of the CPRI reference clock and a slot clock cycle of the CPRI slot clock;
a first determination module configured to determine a downlink trigger clock cycle of the downlink trigger clock and a downlink data clock cycle of the CPRI downlink data clock according to the slot clock cycle; and
a second determination module configured to determine the target clock cycle of the alignment clock according to the reference clock cycle and the slot clock cycle.

Optionally, the second determination module in the apparatus described above comprises:
a calculation unit configured to obtain the least common multiple of the reference clock cycle and the slot clock cycle, and
a determination unit configured to determine the target clock cycle as the least common multiple or an integer multiple of the least common multiple.

Optionally, the apparatus described above for determining a preset number of downlink trigger clocks according to the target clock cycle comprises:
a calculation module configured to calculate a ratio of the target cycle to the slot clock cycle; and
a third determination module configured to take the ratio as the preset number of the downlink trigger clocks.

Optionally, the counting module in the apparatus described above comprises:
a counting unit configured to, when the downlink trigger clock is received, count the current number of the downlink trigger clocks with the current moment as a starting point, and update the number to the current number;
a comparison unit configured to compare the number with the preset number; and
a receiving unit configured to, when the number is less than the preset number, continuously receive the downlink trigger clock until the number reaches the preset number.

Optionally, the alignment module in the apparatus described above comprises:
an alignment unit configured to, when the CPRI reference clock is received, align the CPRI reference clock with the slot clock, and align the CPRI downlink data clock with the CPRI reference clock; and
a determination unit configured to determine that the CPRI downlink data clock is aligned with the slot clock.

A storage medium comprising a program stored, wherein when the program runs, a device where the storage medium is located is controlled to perform the clock synchronization method for common public radio interface data transmission described above.

An electronic device comprising at least one processor, at least one memory connected to the processor, and a bus; wherein the processor and the memory are communicated with each other through the bus; the processor is configured to invoke a program instruction in the memory to perform the clock synchronization method for common public radio interface data transmission described above.

Compared with the prior art, the present invention has the following advantages:
the present invention discloses a clock synchronization method for CPRI data transmission, which comprises: predetermining a target clock cycle of an alignment clock, wherein a CPRI reference clock is aligned with a CPRI slot clock when the target clock cycle is triggered, and determining a preset number of downlink trigger clocks according to the target clock cycle, and comprises: determining whether the CPRI needs to be realigned when the alignment clock is received; if yes, counting the number of the received downlink trigger clocks with the current moment as a starting point until the number reaches the preset number; reconfiguring the CPRI; and after the reconfiguration is completed, waiting for the CPRI reference clock, and aligning a CPRI downlink data clock with the CPRI slot clock when the CPRI reference clock is received. By means of the method described above, a preset number is determined according to a target clock cycle of an alignment clock, and in a case where the number reaches the preset number and a reference clock is received, clock synchronization is realized without the need to take a cycle correlation between a slot clock and the reference clock, a slot condition and the type of transmitted data into consideration.

### BRIEF DESCRIPTION OF THE DRAWINGS

In order to more clearly illustrate the technical schemes in the embodiments of the present invention or in the prior art, the drawings required to be used in the description of the embodiments or the prior art are briefly introduced below. It is obvious that the drawings in the description below are some embodiments of the present invention, and those of ordinary skill in the art can obtain other drawings according to the drawings provided herein without creative efforts.
FIG. 1 is a schematic diagram of a CPRI clock signal in the prior art;
FIG. 2 is a flowchart of a clock synchronization method for CPRI data transmission disclosed in an embodiment of the present application;
FIG. 3 is another flowchart of a clock synchronization method for CPRI data transmission disclosed in an embodiment of the present application;
FIG. 4 is a schematic diagram of a CPRI clock signal disclosed in an embodiment of the present application;
FIG. 5 is a block diagram illustrating the structure of a clock synchronization apparatus for CPRI data transmission disclosed in an embodiment of the application; and
FIG. 6 is a block diagram illustrating the structure of an electronic device disclosed in an embodiment of the present application.

### DETAILED DESCRIPTION

The technical schemes in the embodiments of the present invention will be clearly and completely described below with reference to the drawings in the embodiments of the present invention, and it is obvious that the described embodiments are only a part of the embodiments of the present invention but not all of the embodiments. All other embodiments obtained by those of ordinary skill in the art without making any creative effort based on the embodiments of the present invention shall fall within the protection scope of the present invention.

The above description of the disclosed embodiments enables those skilled in the art to implement or use the present invention.

The present invention discloses a clock synchronization method for CPRI data transmission and a clock synchronization apparatus for CPRI data transmission, which are applied to a solution of an open base station architecture "BBU + RRU" in a modern mobile communication network, and a solution of RRU and BBU based on a CPRI interface further improves the requirements in the field of base stations and can better provide corresponding services for operators, base station equipment providers and testing organizations. CPRI is a common standard, and the scope of its role is to transmit a baseband I/Q signal to RRU through BBU. CPRI has an efficient and flexible I/Q data interface for various standards, such as GSM, WCDMA, and LTE.

This mode, evolving from an open base station architecture in a modern mobile communication network, can be applied to a non-mobile communication network, and more precisely, a solution of "BBU + RRU" based on a CPRI interface is applied to an open base station communication network of a non-LTE frame structure, such as PDT, DMR, and TETRA.

In the open base station communication network of the non-LTE frame structure (such as PDT, DMR, and TETRA), the open base station hardware architecture design in the mobile communication network is adopted, so that the defects in the aspects of outdoor deployment, blind spot coverage, vehicle-mounted, portable and temporary networking, and the like can be overcome, and convenience is provided for emergency use scenes.

Baseband IQ data is delivered to RRU from BBU side through a CPRI interface, and a clock signal is transmitted while delivering the IQ data, thereby completing the interaction of all services on the basis of ensuring an accurate clock signal.

As shown in FIG. 1, clocks are all from a precise external clock source, wherein,
CPRI Sync Clock, a 10 ms pulse signal, is provided to CPRI controller on baseband side for generating a CPRI reference clock. After the CPRI controller on the baseband side is started, the CPRI controller will keep synchronized with the CPRI Sync Clock, as shown in FIG. 1, and after the CPRI controller is started, CPRI DL Data Clock will keep synchronized with the CPRI Sync Clock.

Slot Clock is a slot clock of a non-LTE frame structure with a clock cycle of 14.167 ms, wherein 14.167 ms is used to indicate a cycle of a slot in Tetra protocol where a slot has 255 Symbols, each Symbol having a rate of 18K symbols/second, so that the cycle of a slot is equal to 255 Symbol/18K Symbol, that is, the cycle of a slot is equal to about 14.167 ms.

DL Trigger Clock is also a 14.167 ms clock, which is ahead of the Slot Clock and is used by a protocol stack to prepare downlink data in advance, and when the Slot Clock signal comes, to start to send the downlink data.

CPRI DL Data Clock: IQ data transmitted on the baseband side is delivered to the RRU depending on the CPRI DL Data Clock, and the CPRI DL Data Clock signal is constructed so as to satisfy one frame of data of the Slot Clock, so this clock cycle is also 14.167 ms.

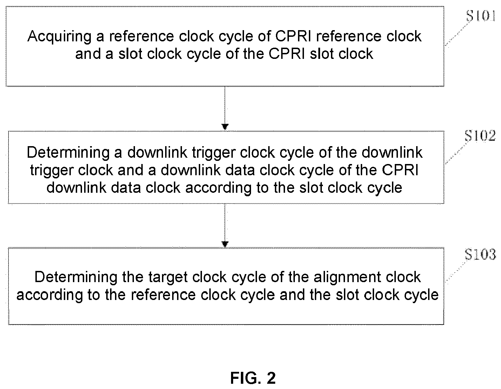

As can be seen from FIG. 1, when the start of CPRI is completed, the CPRI DL Data Clock is aligned with the CPRI Sync Clock. The time of starting CPRI is arbitrary, so there is a problem: the CPRI DL Data Clock cannot align with the Slot Clock when CPRI is started. Therefore, the present invention provides a clock synchronization method for CPRI data transmission, which realizes a relationship satisfying the alignment of CPRI DL Data Clock and Slot Clock. In the synchronization method, an Alignment Clock is introduced, and a target clock cycle of the alignment clock is predetermined, wherein CPRI Sync Clock is aligned with the Slot Clock when the target clock cycle is triggered. A flow for determining the target clock cycle of the alignment clock is as shown in FIG. 2, and comprises the steps:
S101. Acquiring a reference clock cycle of the CPRI reference clock and a slot clock cycle of the CPRI slot clock.

In an embodiment of the present invention, the reference clock cycle and the slot clock cycle of the CPRI Sync Clock are acquired, wherein the CPRI Sync Clock has the reference clock cycle of 10 ms, and the slot clock cycle of the Slot Clock is different due to different transmitted data; when PDT data is transmitted, the slot clock cycle is 30 ms, and when TERTA data is transmitted, the slot clock cycle is 14.167 ms. In an embodiment of the present invention, the slot clock cycle of 14.167 ms is taken as an example for description.

S102. Determining a downlink trigger clock cycle of the downlink trigger clock and a downlink data clock cycle of the CPRI downlink data clock according to the slot clock cycle.

In an embodiment of the present invention, if the slot clock cycle is 14.167 ms, the downlink trigger clock cycle and the downlink data clock cycle are the same as the slot clock cycle, and therefore, both the downlink trigger clock cycle and the downlink data clock cycle are 14.167 ms.

S103. Determining the target clock cycle of the alignment clock according to the reference clock cycle and the slot clock cycle.

In an embodiment of the present invention, the least common multiple of the reference clock cycle and the slot clock cycle is obtained; the target clock cycle is the least common multiple or an integer multiple of the least common multiple.

In an embodiment of the present invention, the reference clock cycle of 10 ms and the slot clock cycle of 14.167 ms are taken as examples, and the target clock cycle is the least common multiple (170 ms or 170 × N) of the reference clock cycle and the slot clock cycle, wherein N is an integer multiple greater than 1.

Further, a preset number is determined according to the target clock cycle, and the determining process is as follows: calculating a ratio of the target cycle to the slot clock cycle, wherein the target clock cycle is 170 ms, the slot clock cycle is 14.167 ms (for calculation accuracy, 255/18K is used instead of 14.167 ms for calculation), then the ratio of the two is calculated as 12, and therefore the preset number is defined as 12.

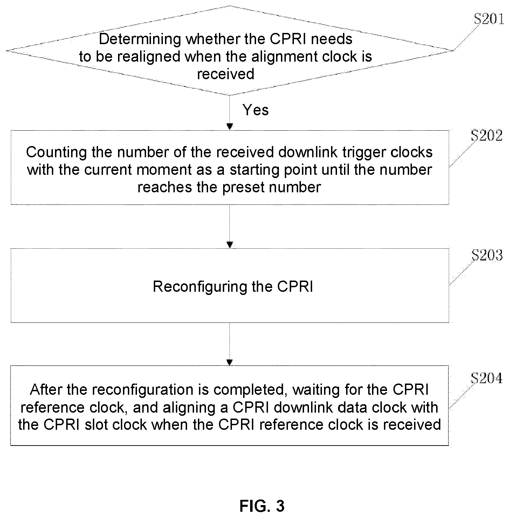

Based on clock signals shown in FIG. 1, the flow for performing the synchronization method is as shown in FIG. 3, and comprises the steps:
S201. Determining whether the CPRI needs to be realigned when the alignment clock is received.

In an embodiment of the present invention, in a case where the alignment clock is received, since a cycle of the target clock of the Alignment Clock is 170 ms, 170 ms satisfies a relationship that it is a common multiple of 10 ms and 14.167 ms. The time when the 170 ms alignment clock is triggered is exactly the moment when the CPRI Sync Clock is completely aligned with the Slot Clock.

At this time, it is determined whether CPRI needs to be realigned, and the CPRI link needs to be realigned when jitter or anomaly occurs in the CPRI link, wherein when the anomaly occurs in the CPRI link, CPRI controller actively reports a message of link anomaly; when the jitter occurs in the CPRI link, for clock cycles of CPRI Sync Clock, Slot Clock, DL Trigger Clock and CPRI DL Data Clock and the target clock cycle, it is determined whether each of the above clock cycles fluctuates within the corresponding cycle fluctuation range, if each clock cycle fluctuates within the corresponding clock cycle fluctuation range, the CPRI does not need to be realigned, otherwise, when at least one clock cycle fluctuates outside the corresponding clock cycle fluctuation range, the CPRI needs to be realigned, and an example is given with respect to the clock cycle fluctuation range, for example, if a reference clock cycle is 10 ms, the fluctuation range corresponding to the reference clock period is 10 ms ± 8 µs. The corresponding clock cycle fluctuation range is set according to specific situations, and is not specifically limited in the embodiments of the present invention.

S202. Counting the number of the received downlink trigger clocks with the current moment as a starting point until the number reaches the preset number.

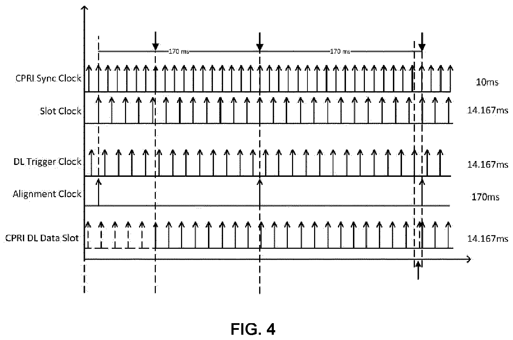

In an embodiment of the present invention, as shown in FIG. 4, when CPRI needs to be realigned, the number of the received DL Trigger Clocks is counted with the current moment as a starting point until the number reaches the preset number, and the counting processes are as follows: when the DL Trigger Clock is received, counting the current number of the DL Trigger Clocks with the current moment as a starting point, updating the number to the current number, comparing the number with the preset number, and when the number is less than the preset number, continuously receiving the DL Trigger Clock until the number reaches the preset number.

S203. Reconfiguring the CPRI.

In an embodiment of the present invention, the operation of reconfiguring the CPRI is as follows: firstly powering off the CPRI link, then powering on the CPRI link when the power off is completed.

S204. After the reconfiguration is completed, waiting for the CPRI reference clock, and aligning a CPRI downlink data clock with the CPRI slot clock when the CPRI reference clock is received.

In an embodiment of the present invention, when an instruction that the reconfiguration is completed is received, the preset number of 12 is taken as an example for description, and it is necessary to continuously wait for 12 DL Trigger Clocks. When 12 DL Trigger Clocks have been continuously received, that is, a condition for realigning CPRI is met (the CPRI link is disconnected and then reconnected), the realignment of CPRI begins (the CPRI link is disconnected and then reconnected), and CPRI Sync Clock is waited; in a case of receiving the CPRI Sync Clock, the CPRI Sync Clock is aligned with CPRI DL Data Clock at this time, the CPRI Sync Clock is exactly completely aligned with the Slot Clock at this time point, and then the CPRI DL Data Clock is completely aligned with Slot Clock at this time. The introduction of the alignment clock can realize the clock synchronization of non-LTE frame data transmission by using CPRI, and ensure the complete alignment of CPRI DL Data Clock and Slot Clock.

The present invention discloses a clock synchronization method for CPRI data transmission, which comprises: predetermining a target clock cycle of an alignment clock, wherein a CPRI reference clock is aligned with a CPRI slot clock when the target clock cycle is triggered, and determining a preset number of downlink trigger clocks according to the target clock cycle, and comprises: determining whether the CPRI needs to be realigned when the alignment clock is received; if yes, counting the number of the received downlink trigger clocks with the current moment as a starting point until the number reaches the preset number; reconfiguring the CPRI; and after the reconfiguration is completed, waiting for the CPRI reference clock, and aligning a CPRI downlink data clock with the CPRI slot clock when the CPRI reference clock is received. By means of the method described above, a preset number is determined according to a target clock cycle of an alignment clock, and in a case where the number reaches the preset number and a reference clock is received, clock synchronization is realized without the need to take a cycle correlation between a slot clock and the reference clock, a slot condition and the type of transmitted data into consideration.

In the embodiments of the present invention, based on the synchronization process described above, in a clock synchronization solution for TETRA data transmission by using CPRI, BBU is connected to RRU through a CPRI interface, and a clock signal is transmitted while delivering the IQ data, thereby completing the interaction of all services on the basis of ensuring an accurate clock signal.

The specific implementation processes are as follows.
1. A precise external clock source provides four clock signals, which are respectively:
   (1) CPRI Sync Clock: a 10 ms pulse signal, used by CPRI controller for generating a local CPRI reference clock.
   (2) Slot Clock: a 14.167 ms slot clock.
   (3) DL Trigger Clock: a 14.167 ms downlink trigger clock.
   (4) Alignment Clock: a 170 ms alignment clock.
2. The CPRI initialization is completed and the CPRI needs to be reconfigured.
3. The 170 ms alignment clock is waited.
4. The 170 ms alignment clock is received, and then the state of the 170 ms alignment clock is set to be triggered.
5. The DL Trigger Clock is waited.
6. The DL Trigger Clock is received, the current state of the 170 ms alignment clock is determined, the state of the 170 ms alignment clock is found to be triggered, and counting is started.
7. 12 DL Trigger Clocks are continuously waited.
8. The 12 DL Trigger clocks have been continuously received.
9. The CPRI is reconfigured (the CPRI link is powered off and then powered on).
10. A next CPRI Sync Clock is waited, that is, the time point when the CPRI Sync Clock is exactly completely aligned with the Slot Clock, the CPRI starts to work, at this time, the CPRI DL Data Clock is aligned with the CPRI Sync Clock, and because the CPRI Sync Clock is aligned with the Slot Clock, the CPRI DL Data Clock is completely aligned with the Slot Clock. In the embodiments of the present invention, the synchronization method realigns CPRI (the CPRI link is disconnected and then reconnected) according to the alignment clock, the cycle of the alignment clock signal satisfies a relationship that CPRI Sync Clock and Slot Clock are a common multiple, and the clock synchronization can be realized as long as there is the alignment clock signal. In a case of multi-base station networking, the complete synchronization of the multiple stations can be ensured according to the alignment clock signal. The alignment clock signal ensures that the CPRI Sync Clock and the Slot Clock are in an aligned relationship without depending on the constraint conditions such as a software timer and a slot number, so this scheme is suitable for a clock synchronization scheme of transmitting a communication protocol of a non-LTE frame structure by using CPRI, such as PDT, DMR, and TETRA.

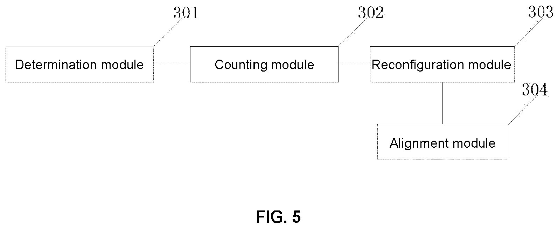

Based on the clock synchronization method for CPRI data transmission described above, in an embodiment of the present invention, a clock synchronization apparatus for CPRI data transmission is provided, and a block diagram of the synchronization apparatus is as shown in FIG. 5, wherein a target clock cycle of an alignment clock is predetermined, wherein a common public radio interface reference clock is aligned with a common public radio interface slot clock when the target clock cycle is triggered, and a preset number of downlink trigger clocks is determined according to the target clock cycle; and the synchronization apparatus comprises: a determination module 301, a counting module 302, a reconfiguration module 303 and an alignment module 304,
wherein,
the determination module 301 is configured to determine whether the CPRI needs to be realigned when the alignment clock is received;
the counting module 302 is configured to, if yes, count the number of the received downlink trigger clocks with the current moment as a starting point until the number reaches the preset number;
the reconfiguration module 303 is configured to reconfigure the CPRI; and
the alignment module 304 is configured to, after the reconfiguration is completed, wait for the CPRI reference clock, and align a CPRI downlink data clock with the CPRI slot clock when the CPRI reference clock is received.

The present invention discloses a clock synchronization apparatus for common public radio interface data transmission, wherein a target clock cycle of an alignment clock is predetermined, a CPRI reference clock is aligned with a CPRI slot clock when the target clock cycle is triggered, and a preset number of downlink trigger clocks is determined according to the target clock cycle; and the clock synchronization method comprises: determining whether the CPRI needs to be realigned when the alignment clock is received; if yes, counting the number of the received downlink trigger clocks with the current moment as a starting point until the number reaches the preset number; reconfiguring the CPRI; and after the reconfiguration is completed, waiting for the CPRI reference clock, and aligning a CPRI downlink data clock with the CPRI slot clock when the CPRI reference clock is received. In a case where the number reaches the preset number and a common public radio interface reference clock awaited is received, the apparatus described above realizes clock synchronization without the need to take a cycle correlation between a slot clock and the common public radio interface reference clock awaited, a slot condition and the type of transmitted data into consideration.

In an embodiment of the present invention, the synchronization apparatus for predetermining a target clock cycle of an alignment clock comprises:
an acquisition module 305, a first determination module 306 and a second determination module 307,
wherein,
the acquisition module 305 is configured to acquire a reference clock cycle of the CPRI reference clock and a slot clock cycle of the CPRI slot clock;
the first determination module 306 is configured to determine a downlink trigger clock cycle of the downlink trigger clock and a downlink data clock cycle of the CPRI downlink data clock according to the slot clock cycle; and
the second determination module 307 is configured to determine the target clock cycle of the alignment clock according to the reference clock cycle and the slot clock cycle.

In an embodiment of the present invention, the second determination module 307 comprises: a calculation unit 308 and a determination unit 309,
wherein,
the calculation unit 308 is configured to obtain the least common multiple of the reference clock cycle and the slot clock cycle; and
the determination unit 309 is configured to determine the target clock cycle as the least common multiple or an integer multiple of the least common multiple.

In an embodiment of the present invention, the apparatus for determining a preset number of downlink trigger clocks according to the target clock cycle comprises:
a calculation module 310 and a third determination module 311,
wherein,
the calculation module 310 is configured to calculate a ratio of the target cycle to the slot clock cycle; and
the third determination module 311 is configured to take the ratio as the preset number of the downlink trigger clocks.

In an embodiment of the present invention, the counting module 302 comprises:
a counting unit 312, a comparison unit 313 and a receiving unit 314,
wherein,
the counting unit 312 is configured to, when the downlink trigger clock is received, count the current number of the downlink trigger clocks with the current moment as a starting point, and update the number to the current number;
the comparison unit 313 is configured to compare the number with the preset number; and
the receiving unit 314 is configured to, when the number is less than the preset number, continuously receive the downlink trigger clock until the number reaches the preset number.

In an embodiment of the present invention, the alignment module 304 comprises:
an alignment unit 315 and a determination unit 316,
wherein,
the alignment unit 315 is configured to, when the CPRI reference clock is received, align the CPRI reference clock with the slot clock, and align the CPRI downlink data clock with the CPRI reference clock; and
the determination unit 316 is configured to determine that the CPRI downlink data clock is aligned with the slot clock.

In an embodiment of the present invention, the synchronization apparatus comprises a processor and a memory, the determination module, the counting module, the reconfiguration module, the alignment module and the like described above are stored in the memory as program units, and the processor executes the program units stored in the memory to implement corresponding functions.

The processor comprises a kernel, and the kernel calls the corresponding program units from the memory. The kernel can be set to be one or more, and the clock synchronization is realized by adjusting kernel parameters without the need to take a cycle correlation between a slot clock and a common public radio interface reference clock awaited, a slot condition and the type of transmitted data into consideration.

An embodiment of the present invention provides a storage medium on which a program is stored, wherein the program, when executed by a processor, implements the clock synchronization method for common public radio interface data transmission.

An embodiment of the present invention provides a processor configured to run a program, wherein the processor, when running the program, performs the clock synchronization method for common public radio interface data transmission.

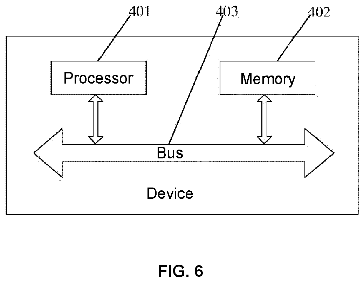

An embodiment of the present invention provides an electronic device, and referring to FIG. 6, the device 4 comprises at least one processor 401, at least one memory 402 connected to the processor, and a bus 403; wherein the processor 401 and the memory 402 are communicated with each other through the bus 403; the processor 401 is configured to invoke a program instruction in the memory 402 to perform the clock synchronization method for common public radio interface data transmission described above. The device herein may be a server, a PC, a PAD, a mobile phone, and the like.

It should be noted that, all embodiments in the specification are described in a progressive manner, each embodiment is highlighted in differences from other embodiments, and reference can be made to each other for the same and similar parts between the embodiments. For the apparatus embodiment, since it is substantially similar to the method embodiment, the description is relatively simple, and reference may be made to the partial description of the method embodiment for relevant points.

Finally, it should also be noted that, relational terms such as "first" and "second" described herein may be used merely to distinguish an entity or operation from another entity or operation without necessarily requiring or implying that there is any such actual relationship or order between these entities or operations. Also, the terms "comprises", "comprising", or any other variation thereof are intended to cover a non-exclusive inclusion, such that a process, method, article, or device that comprises a list of elements include not only those elements but also other elements not expressly listed or elements inherent to such process, method, article, or device. An element defined by the phrase "comprising a ..." does not, without more constraints, preclude the existence of additional identical elements in the process, method, article, or device that comprises the element.

For convenience of description, when the above apparatus is described, the apparatus is divided into various units according to the functions and described separately. Certainly, the functions of the units may be implemented in one or more of software and/or hardware in implementing the present invention.

From the above description of the embodiments, those skilled in the art can clearly understand that the present invention can be implemented by means of software and a necessary general hardware platform. Based on such understanding, the technical schemes of the present invention essentially or part thereof contributing to the prior art may be embodied in the form of a software product. The computer soft product can be stored in a storage medium, such as ROM/RAM, a magnetic disk, an optical disk, and comprises several instructions for enabling a computer device (which may be a personal computer, a server, or a network device) to perform the method described in various embodiments or parts of embodiments of the present invention.

The clock synchronization method for CPRI data transmission and the related apparatus provided by the present invention have been described in detail above. Specific examples are used herein to illustrate the principles and implementations of the present invention.

## Claims

1. A clock synchronization method for CPRI data transmission, comprising: predetermining a target clock cycle of an alignment clock, wherein a common public radio interface CPRI reference clock is aligned with a CPRI slot clock when the target clock cycle is triggered, and determining a preset number of downlink trigger clocks according to the target clock cycle, and comprising:
determining whether the CPRI needs to be realigned when the alignment clock is received;
if yes, counting the number of the received downlink trigger clocks with the current moment as a starting point until the number reaches the preset number;
reconfiguring the CPRI; and
after the reconfiguration is completed, waiting for the CPRI reference clock, and aligning a CPRI downlink data clock with the CPRI slot clock when the CPRI reference clock is received.

2. The method according to claim 1, wherein the predetermining a target clock cycle of an alignment clock comprises:
acquiring a reference clock cycle of the CPRI reference clock and a slot clock cycle of the CPRI slot clock;
determining a downlink trigger clock cycle of the downlink trigger clock and a downlink data clock cycle of the CPRI downlink data clock according to the slot clock cycle; and
determining the target clock cycle of the alignment clock according to the reference clock cycle and the slot clock cycle.

3. The method according to claim 2, wherein the determining the target clock cycle of the alignment clock according to the reference clock cycle and the slot clock cycle comprises:
obtaining the least common multiple of the reference clock cycle and the slot clock cycle,
wherein
the target clock cycle is the least common multiple or an integer multiple of the least common multiple.

4. The method according to claim 2, wherein the determining a preset number of downlink trigger clocks according to the target clock cycle comprises:
calculating a ratio of the target clock cycle to the slot clock cycle; and
taking the ratio as the preset number of the downlink trigger clocks.

5. The method according to claim 1, wherein the counting the number of the received downlink trigger clocks with the current moment as a starting point until the number reaches the preset number comprises:
when the downlink trigger clock is received, counting the current number of the downlink trigger clocks with the current moment as a starting point, and updating the number to the current number;
comparing the number with the preset number; and
when the number is less than the preset number, continuously receiving the downlink trigger clock until the number reaches the preset number.

6. The method according to claim 1, wherein the aligning a CPRI downlink data clock with the CPRI slot clock when the CPRI reference clock is received comprises:
when the CPRI reference clock is received, aligning the CPRI reference clock with the slot clock, and aligning the CPRI downlink data clock with the CPRI reference clock; and
determining that the CPRI downlink data clock is aligned with the slot clock.

7. A clock synchronization apparatus for CPRI data transmission, wherein a target clock cycle of an alignment clock is predetermined, wherein a CPRI reference clock is aligned with a CPRI slot clock when the target clock cycle is triggered, and a preset number of downlink trigger clocks is determined according to the target clock cycle, comprising:
a determination module configured to determine whether the CPRI needs to be realigned when the alignment clock is received;
a counting module configured to, if yes, count the number of the received downlink trigger clocks with the current moment as a starting point until the number reaches the preset number;
a reconfiguration module configured to reconfigure the CPRI; and
an alignment module configured to, after the reconfiguration is completed, wait for the CPRI reference clock, and align a CPRI downlink data clock with the CPRI slot clock when the CPRI reference clock is received.

8. The apparatus according to claim 7, wherein the synchronization apparatus for predetermining a target clock cycle of an alignment clock comprises:
an acquisition module configured to acquire a reference clock cycle of the CPRI reference clock and a slot clock cycle of the CPRI slot clock;
a first determination module configured to determine a downlink trigger clock cycle of the downlink trigger clock and a downlink data clock cycle of the CPRI downlink data clock according to the slot clock cycle; and
a second determination module configured to determine the target clock cycle of the alignment clock according to the reference clock cycle and the slot clock cycle.

9. The apparatus according to claim 8, wherein the second determination module comprises:
a calculation unit configured to obtain the least common multiple of the reference clock cycle and the slot clock cycle, and
a determination unit configured to determine the target clock cycle as the least common multiple or an integer multiple of the least common multiple.

10. The apparatus according to claim 8, wherein the apparatus for determining a preset number of downlink trigger clocks according to the target clock cycle comprises:
a calculation module configured to calculate a ratio of the target clock cycle to the slot clock cycle and
a third determination module configured to take the ratio as the preset number of the downlink trigger clocks.

11. The apparatus according to claim 7, wherein the counting module comprises:
a counting unit configured to, when the downlink trigger clock is received, count the current number of the downlink trigger clocks with the current moment as a starting point, and update the number to the current number;
a comparison unit configured to compare the number with the preset number; and
a receiving unit configured to, when the number is less than the preset number, continuously receive the downlink trigger clock until the number reaches the preset number.

12. The apparatus according to claim 7, wherein the alignment module comprises:
an alignment unit configured to, when the CPRI reference clock is received, align the CPRI reference clock with the slot clock, and align the CPRI downlink data clock with the CPRI reference clock; and
a determination unit configured to determine that the CPRI downlink data clock is aligned with the slot clock.

13. A storage medium, comprising: a program stored, wherein when the program runs, a device where the storage medium is located is controlled to perform the clock synchronization method for common public radio interface data transmission according to any one of claims 1 to 6.

14. An electronic device, comprising: at least one processor, at least one memory connected to the processor, and a bus; wherein the processor and the memory are communicated with each other through the bus; the processor is configured to invoke a program instruction in the memory to perform the clock synchronization method for common public radio interface data transmission according to any one of claims 1 to 6.

## Patentansprüche

1. Taktsynchronisationsverfahren für eine CPRI-Datensendung, umfassend: Vorbestimmen eines Zieltaktzyklus eines Ausrichtungstakts, wobei ein CPRI (Common Public Radio Interface)-Referenztakt mit einem CPRI-Schlitztakt ausgerichtet wird, wenn der Zieltaktzyklus ausgelöst wird, und Bestimmen einer vorgegebenen Anzahl von Downlink-Auslösetakten gemäß dem Zieltaktzyklus, und weiterhin umfassend:
Bestimmen, ob die CPRI neu ausgerichtet werden muss, wenn der Ausrichtungstakt empfangen wird,
wenn ja, Zählen der Anzahl der empfangenen Downlink-Auslösetakte mit dem aktuellen Zeitpunkt als einem Startpunkt, bis die Anzahl die vorgegebene Anzahl erreicht,
Umkonfigurieren der CPRI, und
nachdem die Umkonfiguration abgeschlossen ist, Warten auf den CPRI-Referenztakt und Ausrichten eines CPRI-Downlink-Datentakts mit dem CPRI-Schlitztakt, wenn der CPRI-Referenztakt empfangen wird.

2. Verfahren nach Anspruch 1, wobei das Vorbestimmen eines Zieltaktzyklus eines Ausrichtungstakts umfasst:
Erhalten eines Referenztaktzyklus des CPRI-Referenztakts und eines Schlitztaktzyklus des CPRI-Schlitztakts,
Bestimmen eines Downlink-Auslösetaktzyklus des Downlink-Auslösetakts und eines Downlink-Datentaktzyklus des CPRI-Downlink-Datentakts gemäß dem Schlitztaktzyklus, und
Bestimmen des Zieltaktzyklus des Ausrichtungstakts gemäß dem Referenztaktzyklus und dem Schlitztaktzyklus.

3. Verfahren nach Anspruch 2, wobei das Bestimmen des Zieltaktzyklus des Ausrichtungstakts gemäß dem Referenztaktzyklus und dem Schlitztaktzyklus umfasst:
Erhalten des kleinsten gemeinsamen Vielfachen des Referenztaktzyklus und des Schlitztaktzyklus,
wobei der Zieltaktzyklus das kleinste gemeinsame Vielfache oder ein ganzzahliges Vielfaches des kleinsten gemeinsamen Vielfachen ist.

4. Verfahren nach Anspruch 2, wobei das Bestimmen einer vorgegebenen Anzahl von Downlink-Auslösetakten gemäß dem Zieltaktzyklus umfasst:
Berechnen eines Verhältnisses des Zieltaktzyklus zu dem Schlitztaktzyklus, und
Verwenden des Verhältnisses als der vorgegebenen Anzahl der Downlink-Auslösetakte.

5. Verfahren nach Anspruch 1, wobei das Zählen der Anzahl der empfangenen Downlink-Auslösetakte mit dem aktuellen Zeitpunkt als einem Startpunkt, bis die Anzahl die vorgegebene Anzahl erreicht, umfasst:
wenn der Downlink-Auslösetakt empfangen wird, Zählen der aktuellen Anzahl der Downlink-Auslösetakte mit dem aktuellen Zeitpunkt als einem Startpunkt, und Aktualisieren der Anzahl zu der aktuellen Anzahl,
Vergleichen der Anzahl mit der vorgegebenen Anzahl, und
wenn die Anzahl kleiner als die vorgegebene Anzahl ist, kontinuierliches Empfangen des Downlink-Auslösetakts, bis die Anzahl die vorgegebene Anzahl erreicht.

6. Verfahren nach Anspruch 1, wobei das Ausrichten eines CPRI-Downlink-Datentakts mit dem CPRI-Schlitztakt, wenn der CPRI-Referenztakt empfangen wird, umfasst:
wenn der CPRI-Referenztakt empfangen wird, Ausrichten des CPRI-Referenztakts mit dem Schlitztakt, und Ausrichten des CPRI-Downlink-Datentakts mit dem CPRI-Referenztakt, und
Bestimmen, dass der CPRI-Downlink-Datentakt mit dem Schlitztakt ausgerichtet ist.

7. Taktsynchronisationsvorrichtung für eine CPRI-Datensendung, wobei ein Zieltaktzyklus eines Ausrichtungstakts vorbestimmt ist, wobei ein CPRI-Referenztakt mit einem CPRI-Schlitztakt ausgerichtet wird, wenn der Zieltaktzyklus ausgelöst wird, und wobei eine vorgegebene Anzahl von Downlink-Auslösetakten gemäß dem Zieltaktzyklus bestimmt wird, umfassend:
ein Bestimmungsmodul, das konfiguriert ist zum Bestimmen, ob die CPRI neu ausgerichtet werden muss, wenn der Ausrichtungstakt empfangen wird,
ein Zählmodul, das konfiguriert ist zum, wenn ja, Zählen der Anzahl der empfangenen Downlink-Auslösetakte mit dem aktuellen Zeitpunkt als einem Startpunkt, bis die Anzahl die vorgegebene Anzahl erreicht,
ein Umkonfigurationsmodul, das konfiguriert ist zum Umkonfigurieren der CPRI, und
ein Ausrichtungsmodul, das konfiguriert ist zum, nachdem die Umkonfiguration abgeschlossen ist, Warten auf den CPRI-Referenztakt, und Ausrichten eines CPRI-Downlink-Datentakts mit dem CPRI-Schlitztakt, wenn der CPRI-Referenztakt empfangen wird.

8. Vorrichtung nach Anspruch 7, wobei die Synchronisationsvorrichtung für das Vorbestimmen eines Zieltaktzyklus eines Ausrichtungstakts umfasst:
ein Erhaltungsmodul, das konfiguriert ist zum Erhalten eines Referenztaktzyklus des CPRI-Referenztakts und eines Schlitztaktzyklus des CPRI-Schlitztakts,
ein erstes Bestimmungsmodul, das konfiguriert ist zum Bestimmen eines Downlink-Auslösetaktzyklus des Downlink-Auslösetakts und eines Downlink-Datentaktzyklus des CPRI-Downlink-Datentakts gemäß dem Schlitztaktzyklus, und
ein zweites Bestimmungsmodul, das konfiguriert ist zum Bestimmen des Zieltaktzyklus des Ausrichtungstakts gemäß dem Referenztaktzyklus und dem Schlitztaktzyklus.

9. Vorrichtung nach Anspruch 8, wobei das zweite Bestimmungsmodul umfasst:
eine Berechnungseinheit, die konfiguriert ist zum Erhalten des kleinsten gemeinsamen Vielfachen des Referenztaktzyklus und des Schlitztaktzyklus, und
eine Bestimmungseinheit, die konfiguriert ist zum Bestimmen des Zieltaktzyklus als des kleinsten gemeinsamen Vielfachen oder eines ganzzahligen Vielfachen des kleinsten gemeinsamen Vielfachen.

10. Vorrichtung nach Anspruch 8, wobei die Vorrichtung zum Bestimmen einer vorgegebenen Anzahl von Downlink-Auslösetakten gemäß dem Zieltaktzyklus umfasst:
ein Berechnungsmodul, das konfiguriert ist zum Berechnen eines Verhältnisses des Zieltaktzyklus zu dem Schlitztaktzyklus, und
ein drittes Bestimmungsmodul, das konfiguriert ist zum Verwenden des Verhältnisses als der vorgegebenen Anzahl der Downlink-Auslösetakte.

11. Vorrichtung nach Anspruch 7, wobei das Zählmodul umfasst:
eine Zähleinheit, die konfiguriert ist zum, wenn der Downlink-Auslösetakt empfangen wird, Zählen der aktuellen Anzahl der Downlink-Auslösetakte mit dem aktuellen Zeitpunkt als einem Startpunkt, und Aktualisieren der Anzahl zu der aktuellen Anzahl,
eine Vergleichseinheit, die konfiguriert ist zum Vergleichen der Anzahl mit der vorgegebenen Anzahl, und
eine Empfangseinheit, die konfiguriert ist zum, wenn die Anzahl kleiner als die vorgegebene Anzahl ist, kontinuierlichen Empfangen des Downlink-Auslösetakts, bis die Anzahl die vorgegebene Anzahl erreicht.

12. Vorrichtung nach Anspruch 7, wobei das Ausrichtungsmodul umfasst:
eine Ausrichtungseinheit, die konfiguriert ist zum, wenn der CPRI-Referenztakt empfangen wird, Ausrichten des CPRI-Referenztakts mit dem Schlitztakt, und Ausrichten des CPRI-Downlink-Datentakts mit dem CPRI-Referenztakt, und
eine Bestimmungseinheit, die konfiguriert ist zum Bestimmen, dass der CPRI-Downlink-Datentakt mit dem Schlitztakt ausgerichtet ist.

13. Speichermedium, umfassend: ein gespeichertes Programm, wobei, wenn das Programm ausgeführt wird, eine Vorrichtung, in der das Speichermedium angeordnet ist, gesteuert wird für das Durchführen des Taktsynchronisationsverfahrens für eine CPRI (Common Public Radio Interface)-Datensendung gemäß einem der Ansprüche 1 bis 6.

14. Elektronisches Gerät, umfassend: wenigstens einen Prozessor, wenigstens einen Speicher, der mit dem Prozessor verbunden ist, und einen Bus, wobei der Prozessor und der Speicher miteinander über den Bus kommunizieren, wobei der Prozessor konfiguriert ist zum Aufrufen eines Programmbefehls in dem Speicher für das Durchführen des Taktsynchronisationsverfahrens für eine CPRI (Common Public Radio Interface)-Datensendung gemäß einem der Ansprüche 1 bis 6.

## Revendications

1. Procédé de synchronisation d'horloge pour la transmission de données CPRI, comprenant : la prédétermination d'un cycle d'horloge cible d'une horloge d'alignement, dans lequel une horloge de référence CPRI de l'interface radio publique commune est alignée avec une horloge de créneau CPRI lorsque le cycle d'horloge cible est déclenché, et la détermination d'un nombre prédéfini d'horloges de déclenchement de liaison descendante en fonction du cycle d'horloge cible, et comprenant :
la détermination du fait que le CPRI doit être réaligné lorsque l'horloge d'alignement est reçue ;
si oui, le comptage du nombre d'horloges de déclenchement de liaison descendante reçues, en prenant l'instant présent comme point de départ, jusqu'à ce que le nombre atteigne le nombre prédéfini ;
la reconfiguration du CPRI ; et
une fois la reconfiguration terminée, l'attente de l'horloge de référence CPRI et l'alignement d'une horloge de données de liaison descendante CPRI sur l'horloge de créneau CPRI lorsque l'horloge de référence CPRI est reçue.

2. Procédé selon la revendication 1, dans lequel la prédétermination d'un cycle d'horloge cible d'une horloge d'alignement comprend :
l'acquisition d'un cycle d'horloge de référence de l'horloge de référence CPRI et d'un cycle d'horloge de créneau de l'horloge de créneau CPRI ;
la détermination d'un cycle d'horloge de déclenchement de liaison descendante de l'horloge de déclenchement de liaison descendante et un cycle d'horloge de données de liaison descendante de l'horloge de données de liaison descendante CPRI en fonction du cycle d'horloge de créneau ; et
la détermination du cycle d'horloge cible de l'horloge d'alignement en fonction du cycle d'horloge de référence et du cycle d'horloge de créneau.

3. Procédé selon la revendication 2, dans lequel la détermination du cycle d'horloge cible de l'horloge d'alignement en fonction du cycle d'horloge de référence et du cycle d'horloge de créneau comprend :
l'obtention du plus petit multiple commun du cycle d'horloge de référence et du cycle d'horloge de créneau,
dans lequel le cycle d'horloge cible est le plus petit multiple commun ou un multiple entier du plus petit multiple commun.

4. Procédé selon la revendication 2, dans lequel la détermination d'un nombre prédéfini d'horloges de déclenchement de liaison descendante en fonction du cycle d'horloge cible comprend :
le calcul d'un rapport entre le cycle d'horloge cible et le cycle d'horloge de créneau ; et
en prenant le rapport comme nombre prédéfini des horloges de déclenchement de liaison descendante.

5. Procédé selon la revendication 1, dans lequel le comptage du nombre d'horloges de déclenchement de liaison descendante reçues, avec l'instant présent comme point de départ, jusqu'à ce que le nombre atteigne le nombre prédéfini comprend :
à la réception de l'horloge de déclenchement de la liaison descendante, le comptage du nombre actuel d'horloges de déclenchement de liaison descendante en prenant l'instant présent comme point de départ, et la mise à jour du nombre jusqu'au nombre actuel ;
la comparaison du nombre avec le nombre prédéfini ; et
lorsque le nombre est inférieur au nombre prédéfini, réception continue de l'horloge de déclenchement en liaison descendante jusqu'à ce que le nombre atteigne le nombre prédéfini.

6. Procédé selon la revendication 1, dans lequel l'alignement d'une horloge de données de liaison descendante CPRI sur l'horloge de créneau CPRI lors de la réception de l'horloge de référence CPRI comprend :
lorsque l'horloge de référence CPRI est reçue, l'alignement de l'horloge de référence CPRI sur l'horloge de créneau et l'alignement de l'horloge de données de liaison descendante CPRI sur l'horloge de référence CPRI ; et
déterminer que l'horloge de données de liaison descendante CPRI est alignée sur l'horloge de créneau.

7. Appareil de synchronisation d'horloge pour la transmission de données CPRI, dans lequel un cycle d'horloge cible d'une horloge d'alignement est prédéterminé, dans lequel une horloge de référence CPRI est alignée avec une horloge de créneau CPRI lorsque le cycle d'horloge cible est déclenché, et un nombre prédéfini d'horloges de déclenchement de liaison descendante est déterminé en fonction du cycle d'horloge cible, comprenant :
un module de détermination configuré pour déterminer si le CPRI doit être réaligné lorsque l'horloge d'alignement est reçue ;
un module de comptage configuré pour, si oui, compter le nombre d'horloges de déclenchement de liaison descendante reçues, en prenant l'instant présent comme point de départ, jusqu'à ce que le nombre atteigne le nombre prédéfini ;
un module de reconfiguration configuré pour reconfigurer le CPRI ; et
un module d'alignement configuré pour, une fois la reconfiguration terminée, attendre l'horloge de référence CPRI et aligner une horloge de données de liaison descendante CPRI sur l'horloge de l'emplacement CPRI lorsque l'horloge de référence CPRI est reçue.

8. Appareil selon la revendication 7, dans lequel l'appareil de synchronisation pour prédéterminer un cycle d'horloge cible d'une horloge d'alignement comprend :
un module d'acquisition configuré pour acquérir un cycle d'horloge de référence de l'horloge de référence CPRI et un cycle d'horloge de créneau de l'horloge de créneau CPRI ;
un premier module de détermination configuré pour déterminer un cycle d'horloge de déclenchement de liaison descendante de l'horloge de déclenchement de liaison descendante et un cycle d'horloge de données de liaison descendante de l'horloge de données de liaison descendante CPRI en fonction du cycle d'horloge de créneau ; et
un deuxième module de détermination configuré pour déterminer le cycle d'horloge cible de l'horloge d'alignement en fonction du cycle d'horloge de référence et du cycle d'horloge de créneau.

9. Appareil selon la revendication 8, dans lequel le deuxième module de détermination comprend :
une unité de calcul configurée pour obtenir le plus petit multiple commun du cycle d'horloge de référence et du cycle d'horloge de créneau, et
une unité de détermination configurée pour déterminer le cycle d'horloge cible comme étant le plus petit multiple commun ou un multiple entier du plus petit multiple commun.

10. Appareil selon la revendication 8, dans lequel l'appareil pour déterminer un nombre prédéfini d'horloges de déclenchement de liaison descendante en fonction du cycle d'horloge cible comprend :
un module de calcul configuré pour calculer un rapport entre le cycle d'horloge cible et le cycle d'horloge de créneau et
un troisième module de détermination configuré pour considérer le rapport comme le nombre prédéfini d'horloges de déclenchement de liaison descendante.

11. Appareil selon la revendication 7, dans lequel le module de comptage comprend :
une unité de comptage configurée pour, lorsque l'horloge de déclenchement de la liaison descendante est reçue, compter le nombre actuel d'horloges de déclenchement de liaison descendante en prenant l'instant présent comme point de départ, et mettre à jour le nombre jusqu'au nombre actuel ;
une unité de comparaison configurée pour comparer le nombre avec le nombre prédéfini ; et
une unité de réception configurée pour, lorsque le nombre est inférieur au nombre prédéfini, recevoir en continu l'horloge de déclenchement en liaison descendante jusqu'à ce que le nombre atteigne le nombre prédéfini.

12. Appareil selon la revendication 7, dans lequel le module d'alignement comprend :
une unité d'alignement configurée pour, lorsque l'horloge de référence CPRI est reçue, aligner l'horloge de référence CPRI sur l'horloge de créneau, et aligner l'horloge de données de liaison descendante CPRI sur l'horloge de référence CPRI ; et
une unité de détermination configurée pour déterminer que l'horloge de données de liaison descendante CPRI est alignée sur l'horloge de créneau.

13. Support de stockage, comprenant : un programme stocké, dans lequel, lorsque le programme est exécuté, un dispositif où se trouve le support de stockage est commandé pour exécuter le procédé de synchronisation de l'horloge pour la transmission de données de l'interface radio publique commune selon l'une quelconque des revendications 1 à 6.

14. Dispositif électronique comprenant : au moins un processeur, au moins une mémoire connectée au processeur, et un bus ; dans lequel le processeur et la mémoire communiquent entre eux par l'intermédiaire du bus ; le processeur est configuré pour invoquer une instruction de programme dans la mémoire pour exécuter le procédé de synchronisation d'horloge pour la transmission de données de l'interface radio publique commune selon l'une quelconque des revendications 1 à 6.
